Europäisches Patentamt

European Patent Office

Office européen des brevets

(19)

(11) Veröffentlichungsnummer : **0 079 473**
**B1**

# (12) EUROPÄISCHE PATENTSCHRIFT

(45) Veröffentlichungstag der Patentschrift :
21.01.87

(51) Int. Cl.⁴ : **C 03 C 23/00**, B 23 K 26/06

(21) Anmeldenummer : **82109631.0**

(22) Anmeldetag : **19.10.82**

(54) **Verfahren zum berührungslosen Abtragen von Material von der Oberfläche eines Glasgegenstandes und Vorrichtung zur Durchführung des Verfahrens.**

(30) Priorität : **14.11.81 DE 3145278**

(43) Veröffentlichungstag der Anmeldung :
**25.05.83 Patentblatt 83/21**

(45) Bekanntmachung des Hinweises auf die Patenterteilung : **21.01.87 Patentblatt 87/04**

(84) Benannte Vertragsstaaten :
**AT BE CH DE FR GB IT LI NL SE**

(56) Entgegenhaltungen :
**US-A- 3 670 260
US-A- 4 128 752
THE AMERICAN CERAMIC SOCIETY BULLETIN,
Band 52, Nr. 11, November 1973, Seiten 838-841,
Princeton, N.J., USA, M.A. SAIFI et al.: "Scribing
glass with pulsed and Q-switched CO2 laser"
APPLIED PHYSICS, Band 5, Nr. 3, 1974, Seiten 251-
257, US, C. BAR-ISAAC: "Grid attenuators in laser
machining systems"**

(73) Patentinhaber : **Schott-Zwiesel-Glaswerke Aktiengesellschaft
Postfach 140 Bahnhofstrasse 35
D-8372 Zwiesel (DE)**

(72) Erfinder : **Steinhoff, Hans-Joachim, Dr.-Ing.
Waldesruh 15
D-8372 Rabenstein (DE)**

(74) Vertreter : **Weber, Dieter, Dr. et al
Dr. Dieter Weber und Klaus Seiffert Patentanwälte
Gustav-Freytag-Strasse 25 Postfach 6145
D-6200 Wiesbaden 1 (DE)**

EP 0 079 473 B1

## Beschreibung

Die Erfindung betrifft ein Verfahren zum berührungslosen Abtragen von Material von der Oberfläche eines Gegenstandes aus sprödem Material, insbesondere Glas, mittels Laserstrahl, der durch eine auf den Gegenstand abgebildete Maske geführt wird.

Zum Dekorieren und Markieren von Glasartikeln ist der Einsatz von Laserstrahlen bereits bekannt. Dabei sollen die Glasartikel unter Einwirkung der angewandten Laserstrahlung chemisch oder physikalisch reagieren und bleibende Veränderungen erleiden. Um eine günstige Dekoration vorzusehen, sind bestimmte Spann- und Zentriervorrichtungen sowie optische Systeme vorgesehen, um den Laserstrahl in gewünschter Weise zu führen. Nachteilig ist es hierbei, daß im Randbereich des Laserstrahls auf den Glasartikeln makroskopische Aussplitterungen entstanden, die wenigstens ein unschönes äußeres Erscheinungsbild boten, beim Abtasten unangenehm waren, gegebenenfalls auch zu Verletzungen führen konnten oder teilweise sogar durch weiteres Absplittern zu Beschädigungen und Bruch führen konnten.

Aus den vorstehenden Gründen hat man Laser für Markierungszwecke von Glasartikeln nur sehr bedingt eingesetzt und nach anderen Wegen gesucht. Um auf Glasartikeln Marken, Eichstriche, Firmenzeichen, Schriftzüge, Dekorstriche, Muster oder bildliche Darstellungen aufzubringen, hat man früher schon Auftrags- und Abtragsverfahren entwickelt.

Zu den Auftragsverfahren zählen der Farbauftrag mit dem Pinsel, der Siebdruckauftrag, mit dem eine Siebdruckschablone auf dem Werkstück abgewälzt wird und mit einer Rakelvorrichtung Farbe durch das Sieb gedrückt wird, sowie das Aufziehen von Abziehbildern. Diesem Verfahren schließt sich ein Einbrennvorgang in einem Ofen an, um die Markierung dauerhaft zu machen. Zu diesem Zweck müssen auch spezielle Farben eingesetzt werden, die einen dem Grundwerkstoff angepaßten Ausdehnungskoeffizienten haben, wischfest und spülmaschinenbeständig und in hohem Maße chemikalienbeständig sind.

Bei dem Abtragverfahren werden Materialschichten von der Oberfläche des zu bearbeitenden Gegenstandes abgetragen, wobei das Ätzen mit Flußsäure oder fluoridhaltigen Pasten bekannt ist. Man führt auch mit Hilfe eines Sandstrahlgebläses Abtragsverfahren durch. Auch das Schleifen mit Schleifscheiben und Kupferrädchen ist in der Dekorationstechnik bekannt.

Die vorstehend erwähnten und bekannten Verfahren sind zeit- und energieaufwendig, nicht berührungsfrei und erfordern gegebenenfalls in der Serienproduktion gesonderte Produktionsstraßen.

Aus der US-A-4 128 752 ist bereits eine Vorrichtung zum berührungslosen Abtragen von Material von der Oberfläche eines Werkstückes mittels Laserstrahl bekannt, wie eingangs bezüglich des Verfahrens erläutert ist. Bei dieser optischen Vorrichtung wird ein Laser zur Übertragung eines Musters oder Bildes auf ein Werkstück benutzt. Dafür wird eine Maske in den Strahlengang eingebracht, die in vergrößertem Maßstab das zu übertragende Bild aufweist. Nach dem bekannten Verfahren wird auf dem Werkstück eine scharfen, d. h. fokussierte Abbildung dieser einzigen speziellen Maske erzeugt. Eine auf dieser Oberfläche nicht abgebildete Matrix ist bei dem bekannten Verfahren nicht vorhanden.

Aufgabe der Erfindung ist daher das Schaffen eines Verfahrens sowie einer Vorrichtung zum berührungslosen Abtragen von Material mit Laserstrahl, wonach ein randscharfer Abtrag ohne Absplittern und auch ohne unscharfe Flächen erreichbar ist.

Diese Aufgabe wird bezüglich des Verfahrens erfindungsgemäß dadurch gelöst, daß der Laserstrahl zusätzlich durch mindestens eine wenigstens teilweise absorbierende, vor und/oder hinter der Maske angeordnete Matrix geführt und durch die Matrix in eine Vielzahl von Einzelstrahlen aufgeteilt wird. Auf diese Weise kann man die im Laserstrahl zur Verfügung stehende Energie symmetrisch oder unsymmetrisch im Strahlquerschnitt aufteilen und die Einzelstrahlen an eine gewünschte Abtragung anpassen, wobei hierunter eine optische Einwirkung auf den Einzelstrahl des Laserlichtes verstanden wird, hauptsächlich Veränderung der Intensität, gegebenenfalls aber auch Strahlrichtungsänderung unter Berücksichtigung der Beugung. Durch die Matrix wird praktisch ein Strahlteiler geschaffen, der entsprechend seiner Ausgestaltung die Dämpfung der Energie im Laserstrahl und/oder Beugung an gewünschten Stellen innerhalb der Strahlteilermatrix erlaubt. Die Matrix ist im Strahlengang des optischen Systems gemäß der Erfindung so angeordnet — vorzugsweise vor oder hinter der Bildebene des Systems — daß keine Fokussierung erfolgt. Dies steht auch im Gegensatz zu der Aufgabe der vorgenannten amerikanischen Vorrichtung, bei der alleinig ein scharfes Abbild der Maske auf dem Werkstück produziert werden soll. Auch der Aufwand für die Absorption des Strahles ist erfindungsgemäß wesentlich geringer als bei der vorgenannten amerikanischen Anordnung.

Das neue Verfahren arbeitet mit Vorteil ohne Berührung zwischen Werkzeug und Werkstück, d. h. es werden weder Flüssigkeiten noch massebeladene Teilchenstrahlen auf die zu bearbeitende Oberfläche körperlich aufgebracht. Man genießt bei Anwendung des erfindungsgemäßen Verfahrens die Vorteile der Lichtbeeinflussung, ohne daß unerwünscht hohe Lichtintensität an bestimmten Punkten, z. B. im Randbereich des Strahles, zugegen sind und ohne die sich daraus ergebenden Beschädigungen der Oberfläche des zu bearbeitenden Materials.

Zwischen der Laserlichtquelle, d. h. dem Laser, und dem Werkstück wird zweckmäßig eine Maske angeordnet, welche die Form der Markierung auf der Materialoberfläche bestimmt. In Einzelfällen kann man auch die Maske und Matrix in nur einem Bauteil zusammenfassen, so daß die Maske die Matrix beinhaltet, z. B. ein innerhalb einer bestimmten Außenkontur perforierter Schirm. Das verwendete optische System zwischen Laser und Werkstück erlaubt die Veränderung von Größe und Gestalt einer beispielsweise auf die Oberfläche aufzubringenden bleibenden Kennzeichnung, Markierung oder Dekoration, erlaubt aber auch das Durchtrennen des zu bearbeitenden Gegenstandes, wenn nämlich hinreichend viel Material abgetragen ist. Günstig ist es ferner, wenn ein Gasstrahl während des Abtragungsvorganges zum Abtransport der herausgearbeiteten Partikel auf die Bearbeitungsstelle gerichtet wird. Weitere Aufgaben des Gasstrahles sind chemische und thermische Beeinflussungen des Bearbeitungsortes ; z. B. Beschleunigung chemischer Oberflächenreaktionen durch Vorheizen ; ggf. auch Kühlung ; ferner Zugabe von Zusatzstäuben, z. B. Metalloxide, zum Färben des Bearbeitungsortes. Die dazu verwendeten Gase sind z. B. Inertgase, Edelgase, Sauerstoff, brennbare Gase, wie Wasserstoff, Propan, Luft und deren Gemische.

Zweckmäßig ist es gemäß der Erfindung, wenn die Matrix und/oder die Oberfläche des zu bearbeitenden Gegenstandes im Laserstrahl translatorisch und/oder rotatorisch bewegt wird und wenn der Laserstrahl pulsierend ist. Zwar kann man Material berührungslos auch mit einer stationären Matrix abtragen, weil das oben erwähnte nachteilige Absplittern im wesentlichen bereits durch die Aufteilung des einen eingangsseitigen Laserstrahls in die Vielzahl von ausgangsseitigen Einzelstrahlen mit Hilfe der Matrix vermieden werden kann. Die vorteilhafte und überraschende Dämpfung der Energie des Laserstrahls durch Absorption und/oder Beugung läßt sich also sowohl mit stationärer als auch bewegter Matrix erzeugen ; wobei durch die erwähnte Bewegung das Absplittern besonders vermieden wird. Ferner wird durch die beschriebene Bewegung ein gelenktes Verteilen des Laserstrahles und damit eine Änderung der Energieverteilung, insbesondere im Hinblick auf eine Homogenisierung oder Abschwächung, erreicht. Man erkennt, daß die Form und Art der im Strahlenquerschnitt liegenden Matrix die Intensität, den Grad und die Anordnung der Materialabtragung auf dem Werkstück bestimmt. Mit Vorteil wird somit die Anbringung bestimmter, gewünschter Makromuster möglich, ohne daß im Randbereich der Markierung Unschärfen entstehen, wie dies unvermeidlich z. B. bei Einsatz des Sandstrahlverfahrens der Fall ist.

Man kann zwar Dauerstrichlaser zur Kennzeichnung oder zum Durchtrennen spröder Materialien einsetzen ; insbesondere bei Glas, wie z. B. Hohlglas und Flachglas im kalten Zustand, ist aber der Einsatz eines gepulsten Lasers im Zusammenhang mit den erfindungsgemäßen Maßnahmen besonders zweckmäßig, auch zur Erreichung von Schattierungseffekten. Auch die abgestufte Beaufschlagung und die gewünschte Eindringtiefe des Lasereinzelstrahles im Material kann dann feinstufig variiert werden.

Die Vorrichtung zum berührungslosen Abtragen von Material von der Oberfläche eines Gegenstandes aus sprödem Material, insbesondere Glas, mittels Laserstrahl, der durch eine auf dem Gegenstand abgebildete Maske geführt wird, löst die erfindungsgemäße Aufgabe dadurch, daß zusätzlich zu der Maske vor und/oder hinter dieser mindestens eine Matrix angeordnet ist, die gerade und/oder bekrümmte Felder mit Absorptionsvermögen für Laserstrahlen aufweist. Erfindungsgemäß wird mindestens eine Matrix zur örtlichen Intensitätsbeeinflussung des Laserstrahles eingesetzt, wobei auch mehrere Matrizen an gewünschter Stelle im Strahlengang zwischen Laser und Werkstück angeordnet werden können. Die Matrix kann man z. B. in dem oben beschriebenen optischen Strahlengang vor oder hinter, oder bei einer anderen Ausführungsform vor und hinter der Maske anordnen. Das Wesen der erfindungsgemäßen Matrix besteht darin, daß sie einerseits als Strahlteiler wirkt und andererseits die Intensität des Laserstrahls gegebenenfalls örtlich differenziert abschwächt oder umlenkt. Dies geschieht mit Feldern unterschiedlich oder gleich hohen Absorptionsvermögens, und derartige Felder können unterschiedlich gestaltet und angeordnet sein. Eine bevorzugte Ausführungsform der Erfindung ist z. B. dadurch gekennzeichnet, daß die absorbierenden Felder der Matrix stegartige Linien sind, vorzugsweise unter Bildung eines Gitters oder Siebes angeordnet sind. Zwar können diese absorbierenden Felder auch gekrümmte Linien, runde oder eckige, flächige Felder sein, der Aufbau einer Gitter- oder Siebmatrix ist aber besonders einfach und optisch sehr wirkungsvoll. Die Stege des Gitters oder Siebes haben ein hohes Absorptionsvermögen, und wenn es sich um Metallsiebe oder dergleichen handelt, sind die Stege für das Auftreffende Licht undurchdringlich. Außer der Aufteilung des auf die Matrix auffallenden Gesamtlaserstrahles in eine Vielzahl geteilter Einzelstrahlen kann auch unter Berücksichtigung der Wellennatur des Lichtes die Beugung eine vorteilhafte Rolle spielen, insbesondere in den Randbereichen der Matrix oder des Laserstrahles.

Denkbar sind aber auch andere zweckmäßige Ausführungsformen, die erfindungsgemäß dadurch gekennzeichnet sind, daß die Matrix eine Löcher aufweisende Fläche hohen Absorptionsvermögens ist oder optisch wirksame Materialien aufweist. Die Matrix kann aus teilweise festem, teilweise nicht durchlässigem und/oder optisch wirksamem Material, wie einer oder mehreren Linsen bestehen. Das optisch wirksame Material kann z. B. auch ein Kristall bestimmter Absorption sein, der über den Laserstrahlquerschnitt hinweg unterschiedliche Dicke haben kann und damit unterschiedlich optisch wirkt. Gitter, Siebe, Lochbleche, Lochscheiben oder dergleichen sind durch teilweise nicht durchlässige und teilweise durchlässige Bereiche für das eintretende Laserlicht gekennzeichnet. Die Felder einer derart ausgestatteten Matrix bestehen aus dem für Licht nicht durchlässigen und mechanisch festen Metall, wobei die scharfe Struktur derartiger Gebilde durch die oben erwähnte translatorische und/oder rotatorische Bewegung, vorzugsweise die Bewegung der Matrix selbst, in ihrer Wirkung aufgelockert werden kann.

Die Bewegungen können in beliebiger Richtung und Form erfolgen. Man kann sich beispielsweise ein rechtwinkliges Koordinatensystem in die vorzugsweise ebene Fläche der Matrix gelegt denken und ihre translatorische Bewegung dann in mindestens einer der drei Raumrichtungen erfolgen lassen (drei translatorische Freiheitsgrade). Um diese drei Raumrichtungen als Drehachse kann man sich auch rotatorische Bewegungen (drei rotatorische Freiheitsgrade) denken, und die mechanische Anordnung zur Herstellung derartiger Bewegungen ist für den Fachmann durchführbar. Kombinationen von Translation und Rotation in beliebiger Richtung sind dabei auch möglich. Zweckmäßig ist es auch, wenn derartige Bewegungen oszillatorisch bzw. in Schwingungsform unterschiedlichster Wellengestaltung erfolgen. Es ist hierbei schon erwähnt worden, daß man entweder das Werkstück oder die Matrix oder beide relativ zum Laserstrahl bewegt. Dadurch und bei Verwendung gepulsten Laserlichtes gelangen die Laserimpulse nebeneinander und mit unterschiedlicher Intensität auf das Werkstück, so daß ein differenziertes, schattenähnliches Oberflächenbild durch das Abtragen des Materials ermöglicht wird.

Bei der entsprechenden Bewegung zwischen Laserstrahl und Werkstück kann eine schichtweise Abtragung des Materials von den jeweiligen Oberflächen des Werkstückes derart erfolgen, daß der Laserstrahl auch zum Teilen, d. h. Durchtrennen, oder Ausschneiden von Teilflächen spröder Materialien benutzt werden kann.

Unter spröden Materialien wird vorzugsweise Glas verstanden, wenngleich auch Keramik und spröde Kunststoffe, z. B. Acrylglas, mit den Maßnahmen gemäß der Erfindung bearbeitet werden können. Hierbei kommt es vor allen Dingen darauf an, daß bei einer Ausführungsform der gerade zu verarbeitende Werkstoff im Bereich der Wellenlänge des Laserlichtes eine Absorptionskante zeigt, d. h. das auf seine Oberfläche auftreffende Laserlicht in dem Maße absorbiert, daß das Material z. B. verdampft und auf diese Weise abgetragen wird. Man kann bei einer anderen Ausführungsform aber auch durch Auftragen einer absorbierenden Oberflächenschicht, z. B. Lacke, Farben, Folien, die Oberfläche eines für den Laserstrahl durchlässigen Werkstückes in dem oben genannten Sinne bearbeiten.

Wenn die Matrix aus festem Material bestehende absorbierende Flächen hat, z. B. ein Lochblech oder Sieb ist, muß ferner dafür gesorgt werden, daß nicht die Matrix selbst im Verlaufe des Bearbeitungsverfahrens beschädigt oder unwirksam wird, weil etwa auch auf ihrer Oberfläche die Lasterstrahlenergie umgesetzt wird und zu Materialverdampfungen führt. Es hat sich aber gezeigt, daß man die üblichen, in der Optik verwendeten Materialien, insbesondere Metalle, bei Einsatz z. B. des $CO_2$-Lasers mit der Wellenlänge von 10,2 μm ohne Gefahr verwenden kann. In diesem Wellenlängenbereich ist insbesondere Glas, sofern es sich nicht um Spezialglas handelt, nicht durchlässig, so daß bei Einsatz eines solchen Lasers die Energie in der Oberfläche des Glases umgesetzt wird und auf diese Weise der Materialabtrag möglich wird.

Durch das Verfahren und die Vorrichtung gemäß der Erfindung ist also eine definierte und weitgehend abstimmbare Abtragung des Materials von der Werkstückoberfläche möglich. Man kann beispielsweise auch gewünschte Sollbruchstellen anbringen oder gewisse Materialpartien vollständig und in gewünschter Gestalt abtrennen. Dabei treten mit Vorteil vorzugsweise keine meßbaren Spannungen an den Abtragungs- oder Trennstellen auf, die zu einer Schädigung des Werkstückes führen könnten. Durch das berührungslos arbeitende Verfahren gemäß der Erfindung ist eine schnelle Kennzeichnung und Trennung spröder Materialien, insbesondere Glasartikel, möglich. Durch die Strahlteilermatrix kann eine inhomogene Intensitätsverteilung im Laserstrahlquerschnitt beseitigt oder gemildert werden. Eine oder mehrere Intensitätsspitzen des Laserstrahls können durch stärkere Beugung oder Ausblendung je nach Ausbildung und Einstellung der Strahlteilungsmatrix vereinheitlicht werden.

Mit Vorteil können auch Übergangsbereiche vom Rand des Laserstrahlquerschnitts in dessen Inneres hinein bzw. vom Inneren nach außerhalb hinaus derart einstellbar beeinflußt werden, daß die entsprechenden Übergangsbereiche im Material abgestuft beaufschlagt werden können.

In der Einzelstrahlmitte erfolgt die Maximaleindringung des Laserstrahls in die obere Materialschicht.

Das Verfahren gemäß der Erfindung und die Vorrichtung gestatten ferner eine mehrmalige Beaufschlagung derselben Werkstückstelle, wenn die Strahlteilungsmatrix zwischen den Einzelbeaufschlagungen des Materials im Raum beliebig translatorisch oder rotatorisch mit beliebig im Raum stehender Achse oder kombiniert translatorisch/rotatorisch derart bewegt wird, daß neben einer bestehenden Materialabtragung durch die Einzelstrahlen eine neue Vertiefung entsteht mit dem Zweck, die Struktur der abgetragenen Oberfläche zu vereinheitlichen. Damit wird ein Oberflächeneffekt, ähnlich einer Sandstrahlbehandlung erreicht, ohne daß die Nachteile des Sandstrahlverfahrens in Kauf genommen werden müßten, denn erfindungsgemäß kann berührungslos und randscharf gearbeitet werden. Der Vorgang der Abtragung mittels aufgeteilter Laserstrahlen ist beliebig wiederholbar und gestattet die Aufbringung einer Struktur, wenn das Werkstück während oder zwischen den Beaufschlagungen durch den Laser zusätzlich bewegt wird. Es lassen sich dadurch strukturierte, schattenähnliche Effekte erzielen, dergestalt, daß neben einer starken Abtragung eine geringere Abtragung positioniert wird. Die definierte Materialabtragung durch das Verfahren kann soweit fortgeführt werden, bis eine Durchtrennung des Glases oder des anderweitigen spröden Materials erfolgt ist. Der Schnittcharakter wird von der Ausführung des gewählten Strahlteilers und der Bewegung desselben abhängen.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen :

Figur 1 schematisch ein Teilergebnis des erfindungsgemäßen Verfahrens unter Darstellung des Einwirkens eines abgeteilten Einzelstrahles auf ein gestrichelt im Querschnitt und abgebrochen gezeigtes Werkstück,

Figur 2 schematisch links den Gesamtlaserstrahl und rechts den durch die Matrix in die Vielzahl von Einzelstrahlen geteilten abgehenden Teil des Laserlichtes,

Figur 3 eine besondere Ausführungsform der Matrix in Form eines Siebes mit den durch Doppelpfeile angedeuteten Bewegungsmöglichkeiten in einem Koordinatensystem X, Y, Z und einer beliebig im Raum stehenden Drehachse als Möglichkeit einer Drehbewegung,

Figur 4 Querschnitte als abgebrochene Teile eines bearbeiteten Werkstückes nach verschiedenen Bearbeitungsfolgen und

Figur 5 eine ähnliche Darstellung wie in Fig. 4, wobei jedoch durch aufeinanderfolgende Oberflächenbehandlungen ein Durchtrennen des Materials veranschaulicht wird.

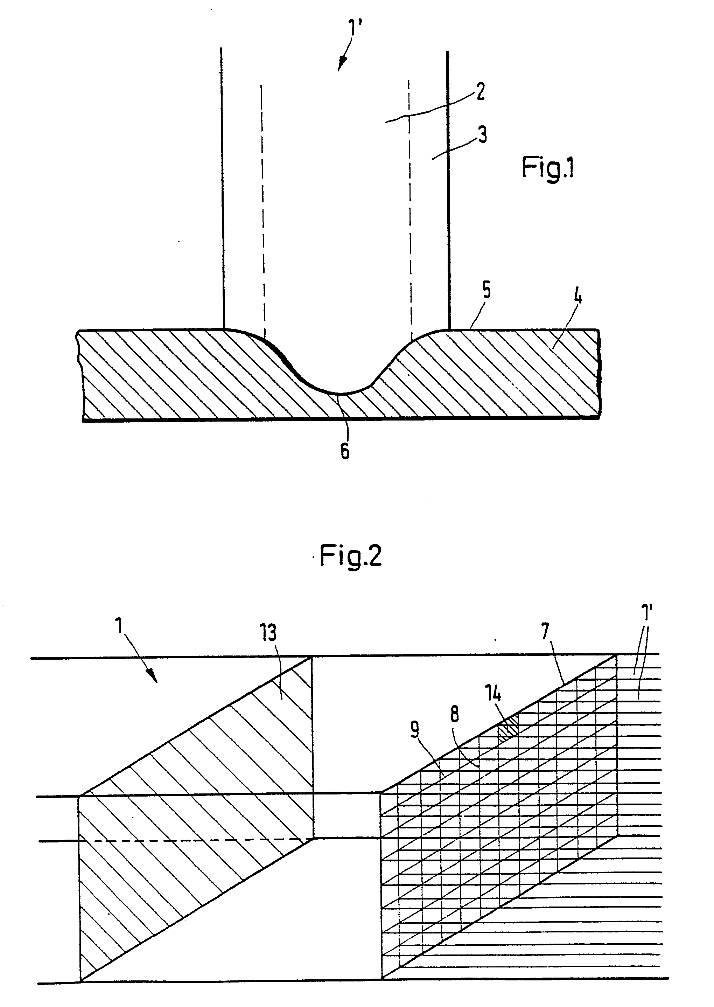

Die berührungslose Einwirkmöglichkeit auf Materialschichten an der Oberfläche oder auch weiter im Materialinneren ergibt sich bereits durch die Erwähnung eines abgeteilten Laserstrahls, der in der Figur 1 im Querschnitt schematisch mit 1′ bezeichnet ist. Figur 1 zeigt einen einzigen Einzelstrahl 1′ mit seinem Zentralbereich 2 und den durch die gestrichelten Linien vom Zentralbereich 2 getrennten Randbereich 3. Das spröde Material ist mit 4 bezeichnet und soll ein Stück Glas darstellen. Seine Oberfläche 5 weist im Wirkbereich des Einzelstrahls 1′ eine muldenartige Vertiefung 6 auf, die im Zentralbereich 2 ihr Maximum hat und von dort nach außen hin im Querschnitt in einer hier dargestellten stetigen Kurve in die Oberfläche 5 übergeht.

Der Gesamtlaserstrahl 1 mit beispielsweise rechteckigem Querschnitt 13 in Figur 2 verläuft von links nach rechts auf die Matrix 7 zu, die als Metallsieb mit geraden Stegen 8 und 9 gebildet ist, welche sich hier jeweils unter rechten Winkeln schneiden. In der idealisierten Darstellung der Figur 2 füllt die Fläche der Strahlteilermatrix 7 den gesamten Strahlquerschnitt des Laserlichts 1 aus. Im Bereich rechts von der Matrix 7 (in der perspektivischen Darstellung für den Betrachter vor der Matrix) treten die Einzelstrahlen 1′ aus mit

einem dargestellten Querschnitt 14, die sich selbstverständlich in der gleichen Richtung von links nach rechts erstrecken wie auch der Gesamtlaserstrahl 1, und parallel zu diesem. Durch die Vielzahl der Striche 1′ soll angedeutet werden, daß der Gesamtlaserstrahl 1 in eine große Vielzahl von Einzelstrahlen 1′ aufgeteilt ist. Da die Metallstege 8 und 9 der Matrix 7 für das Laserlicht 1 undurchdringlich sind, wird die Strahlintensität durch die im Laserstrahl absorbierenden, linienartigen Stege geschwächt, und es sind auch Beugungserscheinungen möglich, die bildlich hier aber nicht dargestellt sind.

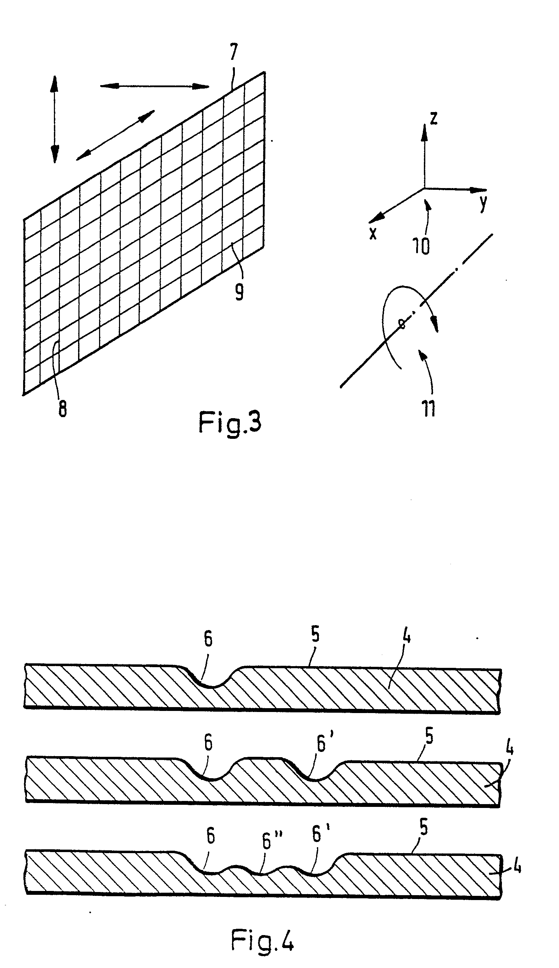

In Figur 3 ist die Matrix 7 mit den vertikal verlaufenden, linienförmigen Stegen 8 und den senkrecht dazu horizontal verlaufenden linienförmigen Stegen 9 deutlicher gezeigt. Die geradlinigen Doppelpfeile zeigen entsprechend dem allgemein mit 10 bezeichneten rechtwinkligen Koordinatensystem die translatorischen Bewegungsmöglichkeiten (in drei translatorischen Freiheitsgraden) der Siebmatrix 7. Der kreisförmige Pfeil 11 deutet die rotatorische Bewegungsmöglichkeit einer beliebig im Raum stehenden Achse an. Auch eine begrenzte periodische oder auch periodisch umkehrende Drehbewegung ist möglich.

In Figur 4 ist wiederum abgebrochen im Schnitt ein Glaskörper 4 gezeigt, der drei verschiedene Bearbeitungszustände von oben nach unten darstellt. Nach der ersten Einwirkung eines Einzelstrahles 1′, der in Figur 4 nicht gezeigt ist, weist die Oberfläche 5 dieses Glasmaterials 4 eine muldenförmige Vertiefung 6 entsprechend der Darstellung der Figur 1 auf.

Wenn die Strahlungsteilermatrix 7 relativ zum Werkstück 4 translatorisch und/oder rotatorisch weiterbewegt ist und eine ähnliche Einwirkung auf eine andere Stelle durch einen Einzelstrahl 1′ erfolgt ist oder nach Einwirkung zweier getrennter Einzelstrahlen 1′ gleichzeitig und nachdem die Oberfläche 5 einen entsprechenden Materialabtrag erfahren hat, ergibt sich der Bearbeitungszustand des mittleren Teils der Figur 4 mit den zwei Mulden 6 und 6′ im Abstand voneinander. Dieser Abstand könnte zwei Öffnungen in einer Matrix oder zwischen absorbierenden Feldern einer Matrix entsprechen, weil nur durch diese Öffnungen der jeweilige Einzelstrahl 1′ auf die Oberfläche 5 des Glasmaterials 4 hindurchtreten konnte.

Der in Figur 4 unten gezeigte Zustand entspricht einer weiteren Nachbearbeitung, wenn nämlich die Oberfläche 5 des Glasmaterials 4 nochmals einem Lasereinzelstrahl 1′ an einer anderen Stelle ausgesetzt war, welche zwischen den beiden Mulden 6 und 6′ angeordnet ist. Dann ergibt sich ein Oberflächenprofil mit drei nebeneinander angeordneten Mulden 6, 6″ und 6′.

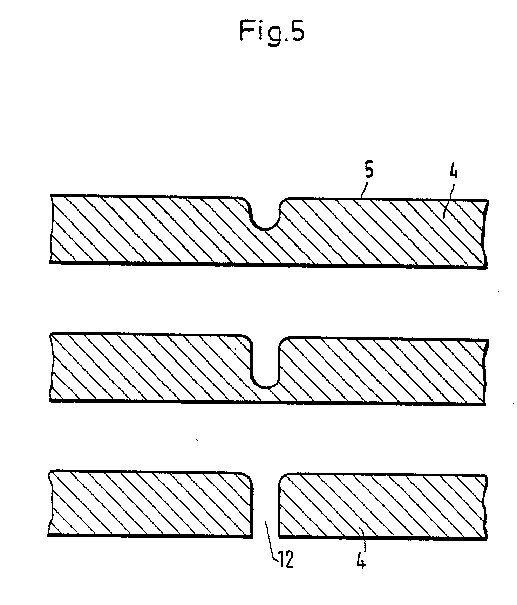

Bei einer anderen Art der Bearbeitung, nämlich dem Durchschneiden eines spröden Materials 4 ergibt sich die Darstellung der Figur 5. Der oberste Zustand ist der nach Einwirken eines Lasergesamtstrahls 1 auf die Oberfläche 5 nach einer ersten Zeitperiode ; der mittlere Zustand ergibt sich nach einer weiteren Zeit ; und wenn der Laserstrahl 1 bzw. die Vielzahl von Einzelstrahlen 1' lange genug auf den Glaskörper 4 eingewirkt haben, erfolgt die Durchtrennung gemäß der untersten Darstellung in Figur 5, die einen Spalt 12 zeigt. Im Bereich dieses Spaltes ist die Energie im Laserstrahl durch Absorption im Glaskörper 4 derart umgewandelt worden, daß das Material durch Verdampfung entfernt und damit abgetragen ist.

**Patentansprüche**

1. Verfahren zum berührungslosen Abtragen von Material von der Oberfläche (5) eines Gegenstandes (4) aus sprödem Material, insbesondere Glas, mittels Laserstrahl (1, 1'), der durch eine auf den Gegenstand abgebildete Maske geführt wird, dadurch gekennzeichnet, daß der Laserstrahl (1) zusätzlich durch mindestens eine wenigstens teilweise absorbierende, vor und/oder hinter der Maske angeordnete Matrix (7) geführt und durch die Matrix (7) in eine Vielzahl von Einzelstrahlen (1') aufgeteilt wird.

2. Verfahren nach Anspruch 1, dadurch gekennzeichnet, daß die Matrix (7) und/oder die Oberfläche (5) des zu bearbeitenden Gegenstandes (4) im Laserstrahl (1, 1') translatorisch und/oder rotatorisch bewegt wird und daß der Laserstrahl (1, 1') pulsierend ist.

3. Vorrichtung zum berührungslosen Abtragen von Material von der Oberfläche (5) eines Gegenstandes (4) aus sprödem Material, insbesondere Glas, mittels Laserstrahl (1, 1'), der durch eine auf dem Gegenstand abgebildete Maske geführt wird, dadurch gekennzeichnet, daß zusätzlich zu der Maske vor und/oder hinter dieser mindestens eine Matrix (7) angeordnet ist, die gerade und-/oder gekrümmte Felder (8, 9) mit Absorptionsvermögen für Laserstrahlen aufweist.

4. Vorrichtung nach Anspruch 3, dadurch gekennzeichnet, daß die absorbierenden Felder (8, 9) der Matrix (7) stegartige Linien sind, vorzugsweise unter Bildung eines Gitters oder Siebes angeordnet sind.

5. Vorrichtung nach Anspruch 3 oder 4, dadurch gekennzeichnet, daß die Matrix (7) eine Löcher aufweisende Fläche hohen Absorptionsvermögens ist oder optisch wirksame Materialien aufweist.

**Claims**

1. A process for the contact-less removal of material from the surface (5) of an article (4) of brittle material, in particular glass, by means of laser beam (1, 1') which is guided through a mask whose image is formed on the article, characterised in that the laser beam (1) is additionally guided through at least one at least partially absorbent matrix (7) which is disposed upstream and/or downstream of the mask, and is split by the matrix (7) into a multiplicity of individual beams (1').

2. A process according to claim 1 characterised in that the matrix (7) and/or the surface (5) of the article (4) to be processed is moved in the laser beam (1, 1') with a translatory and/or rotary movement and that the laser beam (1, 1') is pulsating.

3. Apparatus for the contact-less removal of material from the surface (5) of an article (4) of brittle material, in particular glass, by means of laser beam (1, 1') which is guided through a mask whose image is formed on the article, characterised in that in addition to the mask, upstream and/or downstream thereof, there is at least one matrix (7) which has straight and/or curved areas (8, 9) with an absorption capability for laser beams.

4. Apparatus according to claim 3 characterised in that the absorbent areas (8, 9) of the matrix (7) are bar-like lines and are preferably arranged to form a grid or a mesh configuration.

5. Apparatus according to claim 3 or claim 4 characterised in that the matrix (7) is a surface of high absorption capability, which has holes, or is of optically effective materials.

**Revendications**

1. Procédé pour enlever sans contact de la matière de la surface (5) d'un objet (4) en matériau cassant, verre en particulier, par un rayon laser (1, 1'), envoyé sur l'objet par un masque formé sur celui-ci, caractérisé en ce que le rayon laser (1) traverse auxiliairement une matrice (7), partiellement absorbante au moins, disposée devant et (ou) derrière le masque et qu'il est fractionné par la matrice (7) en une pluralité de rayons individuels (1').

2. Procédé selon revendication 1, caractérisé en ce que la matrice (7) et (ou) la surface (5) de l'objet (4) à traiter suit un mouvement de translation et (ou) de rotation et que le rayon laser (1, 1') est pulsatoire.

3. Dispositif pour enlever sans contact de la matière de la surface (5) d'un objet (4) en matériau cassant, verre en particulier, par un rayon laser (1, 1') qui est envoyé par un masque formé sur l'objet, caractérisé en ce qu'il est prévu, en plus du masque, avant et (ou) derrière celui-ci, au minimum une matrice (7) comportant des champs rectilignes et (ou) curvilignes (8, 9) ayant un pouvoir d'absorption du rayon laser.

4. Dispositif selon revendication (3), caractérisé en ce que les champs absorbants (8, 9) de la matrice (7) sont des lignes disposées en forme de réseau formant, de préférence, un quadrillage ou un tamis.

5. Dispositif selon revendication 3 ou 4, caractérisé en ce que la matrice (7) est une surface percée de trous à haut pouvoir d'absorption ou en matière possédant une activité optique.

Fig.1

Fig.2

Fig.3

Fig.4

# Fig.5